# FASCICULE DE BREVET EUROPEEN

(11) **EP 1 325 625 B1**
(45) Date de publication et mention de la délivrance du brevet: **09.09.2009**
(21) Numéro de dépôt: 01976418.2
(22) Date de dépôt: 12.10.2001
(51) Int. Cl.: H04N 1/407

(54) **DISPOSITIF DE DETECTION D'UN FLUX PHOTONIQUE A BALAYAGE AUTOADAPTATIF**
VORRICHTUNG ZUR ERKENNUNG EINES PHOTONENFLUSSES MIT SELBSTANPASSENDER ABTASTUNG
DEVICE FOR DETECTING A PHOTONIC FLUX WITH SELF-ADAPTIVE SCANNING

(30) Priorité: 13.10.2000 FR 0013138
(43) Date de publication de la demande: 09.07.2003
(73) Titulaire: COMMISSARIAT A L'ENERGIE ATOMIQUE, 75015 Paris (FR)
(72) Inventeur: PANTIGNY, Philippe, F-38640 CLAIX (FR)
(74) Mandataire: Simonnet, Christine
(86) Numéro de dépôt international: PCT/FR2001/003165
(87) Numéro de publication internationale: WO 2002/032111

(56) Documents cités:
- EP-A- 0 585 124
- US-A- 5 267 053

## Description

### DOMAINE TECHNIQUE

L'invention concerne un dispositif de détection d'un flux photonique émis par une scène, du type à balayage, fonctionnant selon un mode connu sous la dénomination anglo-saxonne de TDI pour « Time Delay Intégration » soit littéralement intégration à temps de retard, ce mode étant également appelé mode à sommation retardée en langue française.

L'invention trouve des applications notamment dans des appareils de prise de vue à balayage tels que des caméras, dans le domaine spectral visible, infrarouge ou même des rayons X, mais aussi en spectrométrie.

Elle a un intérêt tout particulier dans des applications nécessitant d'enregistrer un maximum d'informations en un unique balayage de la scène, par exemple dans le domaine spatial lors d'observations de la terre ou dans le domaine de la radiographie panoramique dentaire.

### ETAT DE LA TECHNIQUE ANTERIEURE

Les appareils de prise de vues considérés ici comportent un dispositif de balayage optique et un dispositif de détection avec une pluralité de détecteurs sensibles au flux photonique provenant de la scène dont on veut acquérir une image. Ces détecteurs sont agencés généralement sous la forme d'une matrice définissant perpendiculairement à la direction du balayage une ou plusieurs voies V d'acquisition, chaque voie d'acquisition comportant un nombre déterminé de détecteurs alignés avec le sens de balayage. La scène observée émet un flux photonique. Le dispositif optique animé d'un mouvement de balayage scrute la scène d'observation de la caméra, reçoit ce flux photonique et le renvoie sur les détecteurs. Les détecteurs d'une voie reçoivent en fait chacun à leur tour une même fraction du flux photonique qui provient d'un même élément de la scène à scruter. Chaque élément de la scène est détecté successivement par tous les détecteurs d'une voie. L'information relative à un élément de la scène observé est obtenue en procédant à une sommation retardée et synchrone du balayage optique, des contributions des détecteurs de la voie. Un tel agencement permet d'améliorer de manière significative le rapport signal à bruit des éléments de l'image en sortie du dispositif d'acquisition.

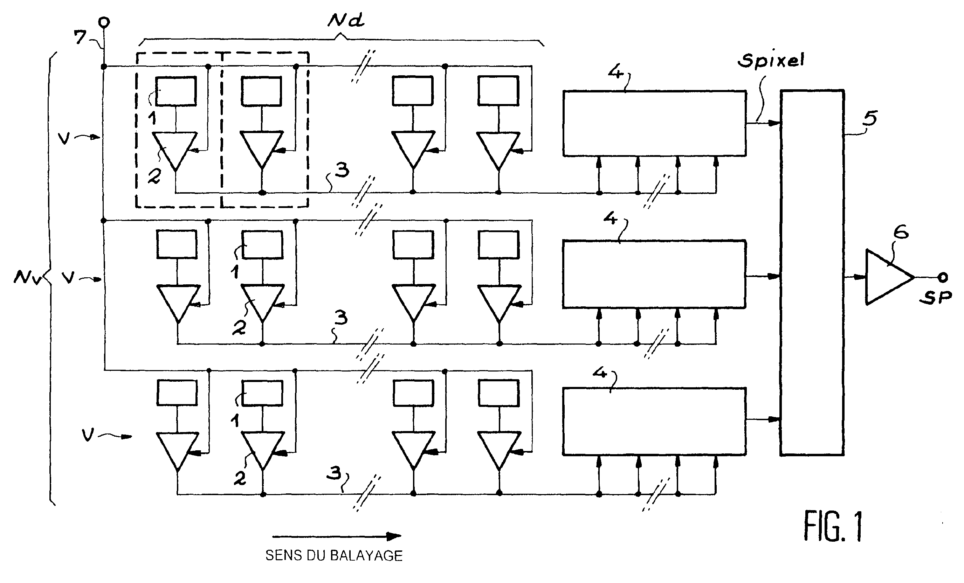

On peut se référer à la figure 1 qui montre schématiquement l'agencement des détecteurs 1 d'un dispositif de détection d'un flux photonique a balayage de type connu. On peut distinguer Nd détecteurs sur une voie V et Nv voies. Les détecteurs peuvent être de type quantique ou thermique.

Dans les détecteurs quantiques, le flux incident de photons est converti en trous ou en électrons. Ces détecteurs quantiques peuvent être réalisés, par exemple, à partir de photodiodes ou de photoconducteurs.

En ce qui concerne les détecteurs thermiques, ils fournissent un signal électrique qui varie en fonction de la température du flux photonique incident. Ils peuvent être réalisés par exemple à partir de résistances variables en fonction de la température, c'est le cas des bolomètres résistifs opérant dans la gamme infrarouge.

Ces détecteurs délivrent une information qui est traitée par un ensemble de fonctions analogiques et/ou numériques réalisé sur un circuit intégré dit de lecture qui peut être réalisé en filière CMOS. Dans le cas d'une photodiode, elle délivre un photo-courant que l'on suppose directement proportionnel à la fraction de flux photonique incident. On suppose que sur la figure 1 les détecteurs 1 sont des photodiodes.

Chaque détecteur 1 est associé à un préamplificateur 2 qui reçoit l'information et qui la conditionne en un signal électrique, représentatif de la fraction de flux photonique reçue, exploitable par un dispositif de sommation retardée 4. Le préamplificateur 2 est situé au voisinage du détecteur 1 avec lequel il est associé. Le préamplificateur 2 fixe le point de repos du détecteur 1. Un ensemble détecteur-préamplificateur sera appelé par la suite photosite.

Les signaux électriques présents en sortie des préamplificateurs 2 d'une voie V, sont échantillonnés et dirigés vers le dispositif de sommation retardée 4 via une connexion 3 commune à tous les préamplificateurs de la voie V ou bus 3. Le dispositif de sommation retardée 4 délivre un signal Spixel correspondant à l'élément de la scène analysé. Le dispositif de sommation retardée 4 est déporté à une extrémité de la ligne que forment les photosites, hors de la zone de détection. Il est séparé de la matrice de photosites.

Les signaux Spixel de toutes les voies V sont ensuite traités dans une chaîne d'acquisition 5, 6 qui permet la gestion de ces signaux et qui délivre des informations à un dispositif utilisateur, ces informations pouvant être une image reconstruite accessible par le dispositif utilisateur (non représenté). Cette chaîne d'acquisition comporte un multiplexeur 5 qui reçoit, en entrée, les signaux Spixel de toutes les voies V et dont la sortie est connectée à un amplificateur 6 qui délivre un signal SP à destination du dispositif utilisateur.

Le préamplificateur 2 rend compatible l'information qu'il reçoit du détecteur 1 avec le dispositif de sommation retardée 4 notamment en l'amplifiant. Il a généralement une fonction de conversion, par exemple conversion de courant en tension ou en charges lorsque le détecteur est quantique. Les préamplificateurs 2 font partie du circuit de lecture.

Les préamplificateurs 2 peuvent être de différents types, par exemple, amplificateur de charges, à circuit d'injection directe ou indirecte, à miroir de courant.

On suppose que sur la, figure 1, les préamplificateurs 2 sont de type intégrateur de charges.

Les détecteurs 1 peuvent être soit monolithiques, soit hybridés avec le circuit de lecture. Dans le premier cas, les détecteurs sont réalisés au sein du circuit de lecture ou sur le circuit de lecture. Dans le second cas, les détecteurs sont réalisés sur un circuit à part qui est interconnecté au circuit de lecture par des technologies adaptées comme l'hybridation par microbilles par exemple.

Le principe de la sommation retardée veut que chaque détecteur contribue avec le même poids à l'élaboration du signal Spixel. Les préamplificateurs 2 doivent alors avoir les mêmes caractéristiques de conversion et d'amplification au moment où ils traitent le même élément de la scène. Cela signifie qu'ils doivent avoir la même fonction de transfert pendant ce traitement.

Cette fonction de transfert joue un rôle important dans le fonctionnement du dispositif de détection car elle fixe le contraste maximum admissible par le dispositif, c'est-à-dire la différence entre le flux incident à saturation et le flux incident équivalent au bruit du circuit de lecture. Cette fonction de transfert détermine également le rapport signal sur bruit en sortie du préamplificateur, ce qui spécifie les caractéristiques électriques du dispositif de sommation retardée 4 et de la chaîne d'acquisition 5, 6.

Un inconvénient de cette structure est qu'elle ne permet pas d'obtenir des informations de très bonne qualité sur la scène, soit lorsque les éléments au sein d'une même scène à observer sont très contrastés, soit lorsque que le contraste varie beaucoup d'une observation à une autre.

En effet, puisque tous les préamplificateurs ont la même fonction de transfert, ceux qui sont confrontés à de fortes intensités du flux incident risquent d'être saturés alors que pour ceux qui sont confrontés à de faibles intensités, le rapport signal sur bruit risque d'être très faible.

Il existe des préamplificateurs dont la fonction de transfert est adaptable par un signal électrique ou stimulus. Il a été proposé d'utiliser de tels préamplificateurs dans des dispositifs de détection connus. Le stimulus est distribué via un bus de contrôle 7 à tous les préamplificateurs 2 comme l'illustre la figure 1.

Pour pouvoir s'accommoder de scènes dont les caractéristiques d'émission sont très différentes dans le temps, il est possible de modifier le stimulus entre deux prises de vue de manière à l'adapter à chaque scène à observer. Cette mise en oeuvre nécessite toutefois une connaissance, a priori, des caractéristiques de la scène avant la prise de vue, ce qui peut poser problème. Cette amélioration est inopérante lors de la détection d'une scène dont les éléments sont très contrastés.

### EXPOSÉ DE L'INVENTION

La présente invention a pour but de proposer un dispositif de détection de flux photonique utilisable lorsque, au sein d'une même observation, les éléments de la scène à observer sont très contrastés et/ou lorsque le contraste varie fortement d'une observation à une autre et ce, sans connaissance a priori, avant la prise de vue, de l'intensité du flux photonique provenant des éléments de la scène à observer.

Pour y parvenir, le dispositif de détection est auto-adaptatif, c'est-à-dire qu'au lieu de réaliser un contrôle collectif de la fonction de transfert de tous les préamplificateurs, la fonction de transfert de chaque préamplificateur est contrôlable de manière individuelle, en fonction de l'intensité du flux photonique que reçoit le détecteur associé.

Plus précisément le dispositif de détection d'un flux photonique émis par une scène, objet de l'invention, comporte au moins une voie d'acquisition comprenant :
- plusieurs détecteurs utiles, alignés avec la direction du balayage, associés chacun avec un préamplificateur, destinés à recevoir chacun une même fraction du flux photonique provenant de la scène à observer et à fournir aux préamplificateurs associés une information représentative de la fraction de flux photonique reçue, ces préamplificateurs délivrant un signal électrique en réponse à l'information et ayant une fonction de transfert modifiable par application d'un stimulus,
- un dispositif de sommation retardée des signaux émis par les préamplificateurs de la voie,
caractérisé en ce que, la voie coopère avec au moins un dispositif de calibration comportant :
- un détecteur de calibration situé en amont des détecteurs utiles par rapport au sens du balayage, destiné à recevoir la fraction de flux photonique avant les détecteurs utiles de la voie, et
- un dispositif d'élaboration du stimulus à partir de la fraction de flux reçue par le détecteur de calibration,
et avec au moins un dispositif de distribution du stimulus en synchronisme avec le balayage cour appliquer aux préamplificateurs de la voie le stimulus avant qu'ils n'aient reçu l'information des détecteurs utiles associés.

La présente invention concerne également un procédé de détection de flux photonique de type à balayage, à partir d'au moins une voie d'acquisition comportant des détecteurs utiles alignés avec la direction du balayage, associés chacun avec un préamplificateur, destinés à recevoir chacun une même fraction de flux photonique provenant d'une scène à observer et à délivrer aux préamplificateurs associés une information représentative de la fraction de flux photonique reçue, ces préamplificateurs ayant une fonction de transfert modifiable par application d'un stimulus et délivrant un signal,
dans lequel :
- on recueille, dans un détecteur de calibration placé en amont des détecteurs utiles, la fraction de flux photonique provenant de la scène à observer avant qu'elle n'atteigne les détecteurs utiles,
- on élabore le stimulus à partir de la fraction de flux recueillie par le détecteur de calibration,
- on distribue ce stimulus, en synchronisme avec le balayage, aux préamplificateurs de la voie avant qu'ils n'aient reçu l'information des détecteurs utiles associés afin de contrôler individuellement leur fonction de transfert,
- on somme de manière retardée les signaux délivrés par les préamplificateurs de la voie.

### BRÈVE DESCRIPTION DES DESSINS

D'autres caractéristiques et avantages de l'invention apparaîtront à la lecture de la description qui va suivre, donnée à titre illustratif et non limitatif, faite en référence aux figures des dessins joints en annexe qui représentent :
- la figure 1 (déjà décrite) un dispositif de détection de flux photonique de type connu ;
- la figure 2 une voie d'un exemple de dispositif de détection de flux photonique conforme à l'invention ;
- la figure 3 un autre exemple de dispositif de détection conforme à l'invention ;
- la figure 4 différents chronogrammes illustrant, dans le cas du dispositif de détection de la figure 1, respectivement l'horloge régissant le balayage optique des détecteurs (A), l'évolution du courant photonique généré par deux détecteurs successifs (B et C), l'évolution de la tension à la sortie des préamplificateurs associés aux deux détecteurs (D et E), des échantillons des tensions précédentes reçus par le dispositif de sommation retardée (F et G) ;

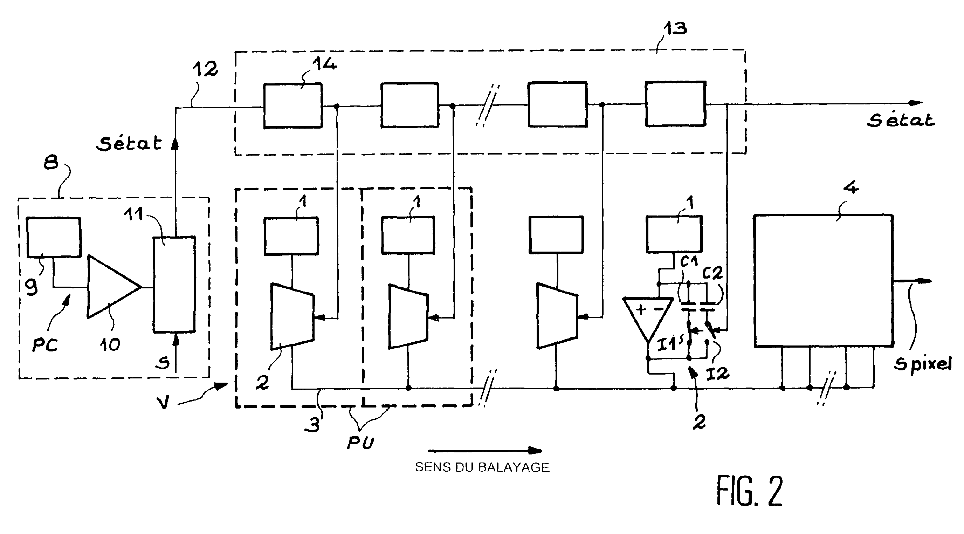

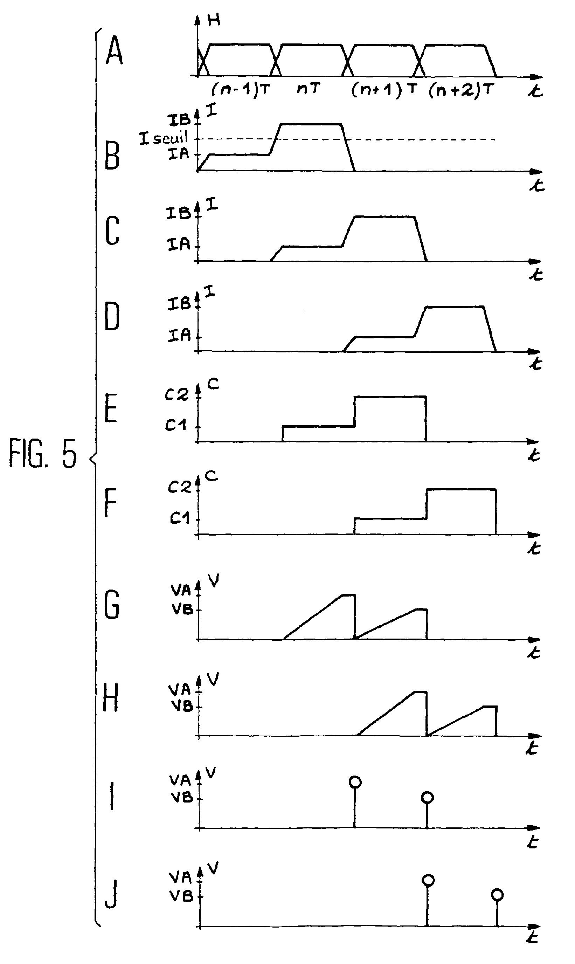

- la figure 5 des chronogrammes illustrant, dans le cas du dispositif de détection de la figure 2, respectivement l'horloge régissant le balayage optique des détecteurs (A), l'évolution du courant photonique généré par le détecteur de calibration (B), l'évolution du courant photonique généré par deux détecteurs utiles successifs (C et D), la sélection du condensateur d'intégration dans les préamplificateurs associés aux deux détecteurs utiles (E et F), l'évolution de la tension à la sortie des préamplificateurs associés aux deux détecteurs utiles (G et H), des échantillons des tensions précédentes reçus par le dispositif de sommation retardée (I et J).

Sur ces figures, les éléments identiques ou similaires portent la même référence.

### EXPOSÉ DÉTAILLÉ DE MODES DE RÉALISATION PARTICULIERS

On se réfère à la figure 2 qui montre, de manière détaillée une voie V d'un dispositif de détection d'un flux photonique conforme à l'invention. Cette voie V comporte comme sur la figure 1, plusieurs détecteurs 1 utiles alignés avec la direction du balayage repérée par une flèche. Les détecteurs utiles 1 reçoivent chacun à leur tour une même fraction de flux photonique provenant des éléments de la scène à observer. Chaque détecteur utile 1 est associé à un préamplificateur 2 pour former un photosite utile PU.

Dans l'exemple décrit, on suppose que les détecteurs utiles 1 sont des photodiodes et que les préamplificateurs 2 des amplificateurs intégrateurs de charges. L'information délivrée par les photodiodes en réponse à la réception de la fraction de flux photonique est un photocourant qui va être intégré par le préamplificateur.

Comme dans l'art connu, les préamplificateurs 2 de la voie V délivrent un signal à un dispositif de sommation retardée 4 par l'intermédiaire d'une connexion 3 commune aux préamplificateurs de la voie V, ou bus. Généralement ce sont des échantillons qui sont appliqués via le bus 3 au dispositif de sommation retardée. Ces échantillons peuvent être obtenus à l'aide d'interrupteurs (non représentés) connectés entre la sortie de chaque préamplificateur 2 et le bus 3.

Le dispositif de sommation retardée 4 combine les fonctionnalités de ligne à retard analogique à celle d'additionneur analogique.

Le dispositif de sommation retardée 4 peut comporter, pour réaliser la fonction d'additionneur, un ensemble d'intégrateurs analogiques synthétisés à partir des techniques dites de capacités commutées. Ce point n'est pas décrit en détail car connu en soi.

Les préamplificateurs 2 sont tels que l'on peut contrôler de manière électrique, par l'application d'un stimulus Sétat, leur fonction de transfert. Dans le cas d'un préamplificateur de type intégrateur de charges, le contrôle de sa fonction de transfert peut se faire en dotant sa boucle de contre-réaction de plusieurs ensembles série condensateur-interrupteur montés en parallèle, ces condensateurs dits d'intégration ayant des valeurs de capacité différentes.

La sélection d'un des condensateurs est obtenue par la commande de la fermeture de l'interrupteur associé, par le stimulus Sétat, les autres restant ouverts. Sur la figure 2, seul le préamplificateur de droite a été détaillé et laisse apparaître deux ensembles de condensateurs-interrupteurs C1-I1, C2-I2 pour le contrôle de sa fonction de transfert. Par exemple le condensateur C1 peut avoir la valeur 0,1pF et le condensateur C2 la valeur 1pF.

Selon le type de préamplificateur 2, le contrôle de sa fonction de transfert peut se faire en sélectionnant un niveau de courant ou de tension parmi plusieurs ou le gain d'un miroir de courant parmi plusieurs.

Conformément à l'invention, chaque voie V coopère avec au moins un dispositif de calibration 8 et au moins un dispositif de distribution 13 du stimulus Sétat aux préamplificateurs de la voie. Le dispositif de calibration 8 comporte un détecteur de calibration 9 et un dispositif d'élaboration 11 du stimulus Sétat à l'intention des préamplificateurs 2 associés aux détecteurs utiles 1.

Le détecteur de calibration 9 est situé en amont des détecteurs utiles 1 par rapport au sens de balayage. Il est aligné avec les détecteurs utiles 1. De cette manière, il reçoit la fraction de flux photonique provenant de la scène à observer avant les détecteurs utiles de la voie V.

En réponse à cette fraction de flux photonique reçue, le détecteur de calibration 9 délivre une information à destination du dispositif d'élaboration du stimulus 11. Le détecteur de calibration 9 peut être de type quantique ou thermique tout comme les détecteurs utiles. Il est plus simple que le détecteur de calibration soit identique aux détecteurs utiles mais d'autres choix sont possibles.

Outre le fait que sa forme géométrique peut être différente de celle des détecteurs utiles, sa distance avec le détecteur utile le plus proche peut être ajustée pour optimiser la durée de la calibration (mesure de la fraction de flux photonique incident et élaboration du stimulus) en fonction des contraintes du balayage.

Par exemple, un dispositif de détection de flux photonique opérant dans le domaine du visible pourra comporter une photodiode en tant que détecteur utile et un phototransistor ou une photogrille en tant que détecteur de calibration.

De manière analogue aux photosites utiles PU, un préamplificateur de calibration 10 peut être associé avec le détecteur de calibration 9 pour former un photosite de calibration PC. Il est monté entre le détecteur de calibration 9 et le dispositif d'élaboration du stimulus 11. Il reçoit l'information du détecteur 9 et délivre un signal compatible avec le dispositif d'élaboration du stimulus 11. Le préamplificateur de calibration est prévu pour fonctionner en régime linéaire dans les pires cas d'éclairements incidents.

On suppose, dans l'exemple décrit, que le préamplificateur de calibration 10 est de type intégrateur de charges. Dans ce cas, on choisit la valeur de la capacité de son condensateur d'intégration pour obtenir ce fonctionnement en régime linéaire. On aurait pu opter pour un autre type de préamplificateur, de manière analogue à ce qui a été décrit pour les préamplificateurs 2 de la voie V.

Le dispositif d'élaboration du stimulus peut réaliser une comparaison entre un signal représentatif de la fraction de flux photonique reçue par le détecteur de calibration et au moins un seuil.

Dans l'exemple de la figure 2, on suppose que le dispositif d'élaboration du stimulus 11 est un comparateur qui reçoit le signal du préamplificateur 10 et le compare à un seuil S.

Si le signal est inférieur au seuil S, le stimulus Sétat aura pour effet, au niveau des préamplificateurs 2, de sélectionner le condensateur C1, sinon il aura pour effet de sélectionner le condensateur C2. La sélection du condensateur C1 se fait en fermant l'interrupteur I1 et en laissant ouvert l'interrupteur I2. Les positions des interrupteurs sont inversées lorsque le condensateur C2 est sélectionné.

La sortie du dispositif d'élaboration du stimulus 11 est reliée par une connexion 12 à l'entrée du dispositif de distribution 13 du stimulus aux préamplificateurs 2 de la voie. En sortie du dispositif de distribution 13 est recueilli le stimulus Sétat. Le dispositif de distribution 13 peut être réalisé par une ligne à retard comportant autant de cellules de retard 14 que de préamplificateurs 2 dans la voie V.

Dans l'exemple, ces cellules de retard 14 sont montées en série. Chaque préamplificateur 2 est relié à la sortie d'une des cellules de retard 14. La première cellule traversée par le stimulus est reliée au préamplificateur associé au premier détecteur utile 1 éclairé par la fraction de flux incident lors du balayage.

Le retard apporté par les cellules 14 est adapté pour que la propagation du stimulus vers les préamplificateurs 2 se fasse de manière synchrone avec le balayage. Dans le cas où le balayage est uniforme, les cellules 14 apportent toutes le même retard.

Les préamplificateurs 2 doivent être opérationnels lorsqu'ils reçoivent le photosignal du détecteur 2 associé, pour en assurer la meilleure conversion possible avant de le transmettre au dispositif de sommation retardée 4.

Le processus de fonctionnement du détecteur de flux photonique selon l'invention peut être résumé comme suit. Lors d'une prise de vue, au niveau d'une voie, à cause du balayage, le détecteur de calibration 9 est éclairé par une fraction de flux photonique, puis c'est le tour des détecteurs 1 utiles successifs. En réponse à cette fraction de flux, chacun des détecteurs 9, 1 délivre une information et ces informations sont échelonnées dans le temps, la première étant celle délivrée par le détecteur de calibration 9. A partir de l'information du détecteur de calibration 9, le dispositif 11 élabore un stimulus qui est distribué, par le dispositif 13, aux différents préamplificateurs 2 de la voie V pour contrôler leur fonction de transfert au mieux. Ils reçoivent ce stimulus avant que l'information provenant du détecteur utile 1 qui leur est associé ne leur parvienne.

On va maintenant, à l'aide de chronogrammes expliquer l'évolution de différents signaux de deux photosites utiles successifs dans un dispositif de détection de l'art antérieur conforme par exemple à la réalisation de la figure 1. On suppose que l'on s'intéresse aux deux premiers photosites encadrés par des pointillés en gras sur la figure 1.

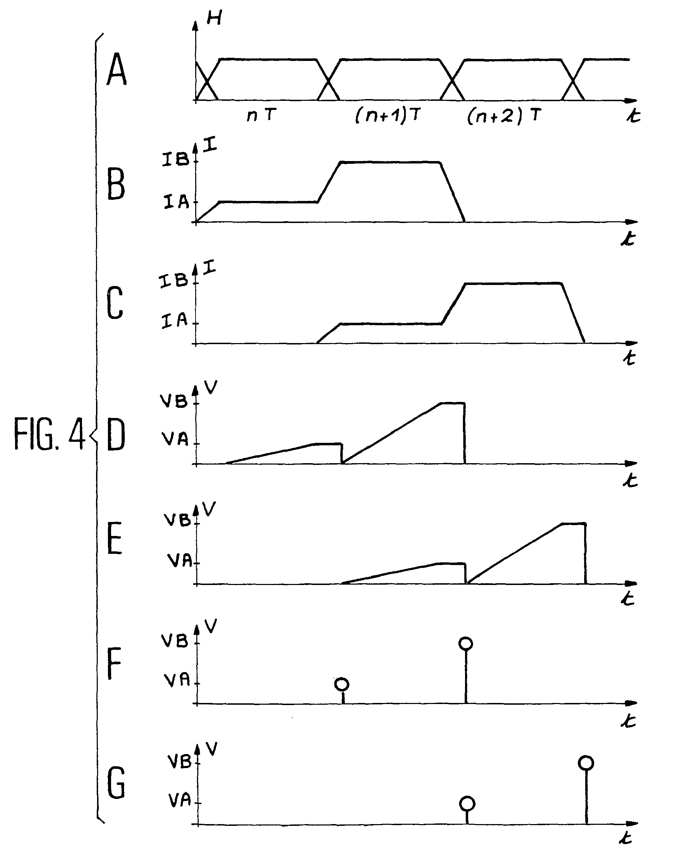

On se réfère à la figure 4 La courbe A montre les signaux d'horloge régissant le balayage. On désigne par temps de vol T, l'intervalle de temps mis par la fraction de flux photonique pour passer d'un détecteur au suivant. Ce temps de vol est fonction du pas entre détecteurs et de la vitesse de balayage.

Les courbes B et C illustrent respectivement pour le premier et le deuxième photosites considérés, le photocourant d'intensité IA puis IB, délivré par leurs détecteurs respectifs exposés à la fraction de flux photonique provenant d'un premier élément de la scène à observer puis d'un second élément de la scène à observer. On suppose que la fraction de flux du premier élément est inférieure en amplitude à celle du second élément.

Les courbes D et E montrent l'évolution de la tension délivrée par les préamplificateurs des deux photosites. Les tensions en sortie des préamplificateurs, à la fin de l'intégration, sont homothétiques du photocourant car il n'y a pas eu modification de leur fonction de transfert au cours de la prise de vue.

Les courbes F et G montrent des échantillons de la tension en sortie des préamplificateurs à envoyer vers le dispositif de sommation retardée.

On se réfère maintenant à la figure 5. Elle concerne le photosite de calibration PC et les deux photosites utiles PU encadrés de pointillés gras sur la figure 2.

La courbe A est analogue à la courbe A de la figure 4 et montre les signaux d'horloge régissant le balayage.

Les courbes B, C, D illustrent respectivement pour le photosite de calibration PC et pour le premier et le deuxième photosites utiles PU considérés, le photocourant d'intensité IA puis IB, délivré par leurs détecteurs respectifs exposés à la fraction de flux photonique provenant d'un premier élément de la scène à observer puis d'un second élément de la scène à observer. On suppose que la fraction de flux du premier élément est inférieure en amplitude à celle du second élément. Sur la courbe B est représenté le photocourant Iseuil qui correspond au seuil S du comparateur 11.

Les courbes E et F montrent pour les deux photosites utiles PU, la sélection des condensateurs d'intégration dans les préamplificateurs. Cela traduit l'état des préamplificateurs. Le basculement du condensateur C1 au condensateur C2 a lieu juste avant qu'un photocourant supérieur à Iseuil n'attaque le préamplificateur concerné.

Les courbes G et H montrent l'évolution de la tension en sortie des préamplificateurs des photosites utiles PU concernés. L'amplitude de ces tensions n'est plus, comme dans le cas d'un contrôle collectif de l'état des préamplificateurs, homothétique au photocourant, car l'intégration du photocourant a été réalisée avec des condensateurs d'intégration de valeurs de capacité différentes.

Enfin les courbes I et J illustrent des échantillons de la tension en sortie des préamplificateurs à envoyer vers le dispositif de sommation retardée .

Des mesures ont montré que le contrôle collectif de la fonction de transfert limite le contraste entre deux informations à un facteur compris entre 10 et 100 selon la valeur du condensateur d'intégration utilisé, alors qu'avec le contrôle individuel, objet de l'invention, des informations dont le contraste atteint un facteur 1000 peuvent être obtenues.

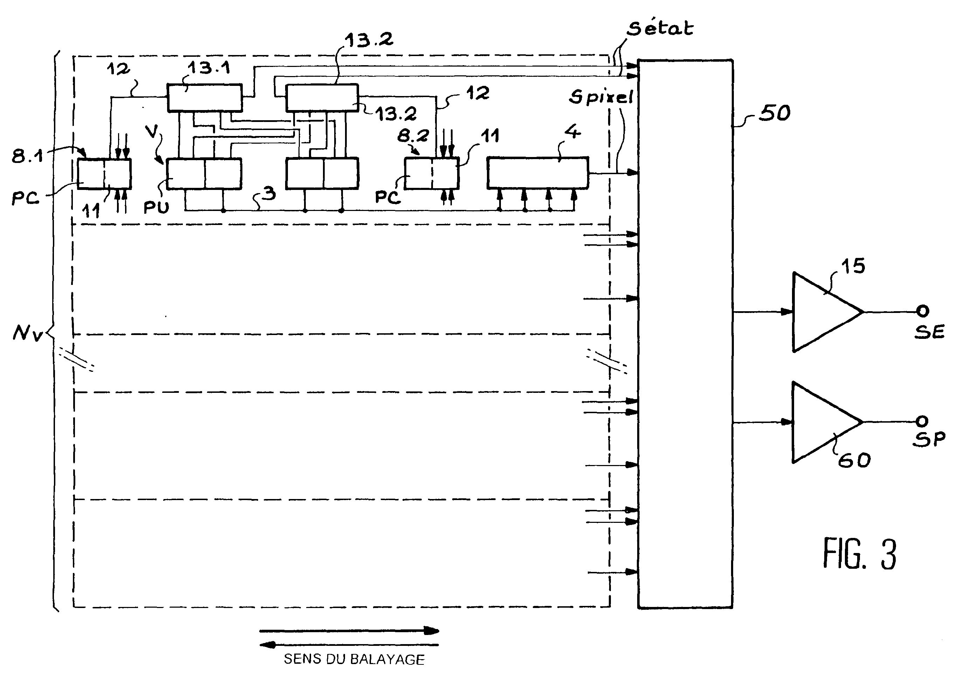

On se réfère maintenant à la figure 3 qui montre un autre exemple de réalisation d'un dispositif de détection selon l'invention. A la manière de la figure 1, le dispositif de détection comporte Nv voies et chaque voie possède Nd détecteurs utiles et donc Nd photosites utiles PU.

Le dispositif de détection de flux photonique est capable de fonctionner avec un balayage bidirectionnel. Le balayage tout en restant parallèle aux voies de détecteurs peut se faire par exemple, une fois dans un sens, une fois dans l'autre. Pour cela on utilise deux dispositifs de calibration 8.1, 8.2 par voie V, l'un étant disposé à une extrémité de la voie et l'autre à l'autre extrémité. Chaque dispositif de calibration 8.1, 8.2 est relié à un dispositif de distribution du stimulus 13.1, 13.2 par l'intermédiaire de la connexion 12. Un dispositif de distribution unique, commun aux deux dispositifs de calibration 8.1, 8.2 pourrait être utilisé.

Le dispositif d'élaboration du stimulus 11 au lieu de réaliser une simple comparaison du signal délivré par le préamplificateur de calibration par rapport à un seuil, pourrait être plus complexe. Une première variante peut être envisagée en utilisant plusieurs seuils, ce qui permet de sélectionner une fonction de transfert parmi plus de deux, au niveau des préamplificateurs d'une voie.

D'autres variantes encore sont possibles. On peut par exemple prendre en compte des informations provenant d'un ou plusieurs éléments de la scène voisins qu'ils proviennent de la scène à un même instant ou à un instant antérieur.

Sur la figure 3, les flèches qui entrent sur le bloc 11 d'élaboration du stimulus illustrent schématiquement ces différentes possibilités.

Au lieu de sélectionner un condensateur parmi plusieurs, on peut réaliser une sélection d'un niveau de tension, d'un niveau de courant ou autres, selon les possibilités offertes par le type de préamplificateur, on peut même envisager que le stimulus commande une combinaison de sélections.

On peut envisager que le dispositif de détection selon l'invention puisse fonctionner avec un contrôle collectif de la fonction de transfert des préamplificateurs associés aux détecteurs utiles. Il suffit que les dispositifs d'élaboration du stimulus 11 délivrent le même stimulus, bloqué à une valeur déterminée, à tous les préamplificateurs lors d'une prise de vue quelle que soit l'intensité du flux photonique incident. On peut par exemple imaginer que le seuil du comparateur soit choisi en dehors de la gamme de valeurs possibles pour les signaux délivrés par le préamplificateur de calibration.

Une différence, par rapport aux dispositifs de détection de l'art antérieur, est que le stimulus Sétat est combiné au signal Spixel pour remonter au signal SP présent en sortie de la chaîne d'acquisition 50, 60, 15. Cette chaîne comporte un dispositif de multiplexage 50 qui reçoit les signaux Spixel et Sétat de toutes les voies du dispositif de détection. Une première sortie du dispositif de multiplexage est reliée à un premier amplificateur de sortie 60 qui délivre le signal SP au dispositif utilisateur. Dans l'exemple décrit la combinaison entre Spixel et Sétat se fait au niveau du dispositif de multiplexage 50.

On peut prévoir qu'une seconde sortie du dispositif de multiplexage 50 soit reliée à un second amplificateur de sortie 15 qui délivre un signal SE représentatif de l'état des préamplificateurs des voies, au dispositif utilisateur.

De manière générale les informations acquises par un dispositif de détection selon l'invention présentent moins de pixels en saturation et moins de bruit que les informations obtenues avec des dispositifs de l'art antérieur. La qualité des informations obtenues à partir de scènes à fort contraste est améliorée de manière tout à fait significative.

Cette amélioration se fait sans connaissance à priori des caractéristiques de la scène à observer.

Le dispositif de calibration contribue à la sélection de l'état optimal des préamplificateurs utiles sans avoir besoin de contre-réaction ou d'échange d'informations avec des organes externes au dispositif de détection.

La détermination de la fonction de transfert des préamplificateurs utiles peut également se faire dans l'optique de minimiser les contraintes de réalisation des circuits analogiques placés en aval des préamplificateurs utiles comme le dispositif de sommation retardée ou les circuits de sortie.

La possibilité de bénéficier d'un gain élevé au niveau des préamplificateurs a des impacts sur la réduction des exigences en bruit de l'électronique en aval. Un préamplificateur à fort gain amplifie l'information provenant du détecteur et son bruit. Le niveau du bruit en sortie du préamplificateur est élevé et on peut tolérer que le dispositif de sommation retardée apporte un bruit relativement élevé.

Un avantage apporté par l'invention est qu'il est possible d'utiliser, au sein du dispositif de sommation retardée, des transistors plus compacts, ce qui va à l'encontre des règles de conception d'amplificateurs à faible bruit. Les contraintes d'implantation et de routage à l'intérieur du dispositif de sommation peuvent être diminuées. En réduisant la surface du dispositif de sommation retardée, on peut réduire le pas entre détecteurs utiles dans la direction orthogonale au balayage.

Un autre avantage obtenu est qu'il est possible d'augmenter la profondeur du dispositif de sommation retardée. La profondeur correspond au nombre Nd de détecteurs utiles sur une voie, c'est à dire au nombre d'additions effectuées par le dispositif de sommation retardée.

Chaque addition est réalisée au moyen d'opérateurs analogiques et est entachée d'un bruit. Le bruit de sommation s'avère, en première approximation, égal à la somme quadratique des contributions respectives de chacun des opérateurs analogiques. Il augmente avec la profondeur du dispositif de sommation retardée. Le fait de tolérer un bruit de sommation élevé permet d'augmenter la profondeur du dispositif de sommation retardée et par conséquent d'améliorer le rapport signal sur bruit en sortie.

En augmentant le gain au niveau des préamplificateurs utiles, on peut relâcher les exigences sur les autres circuits en aval par exemple au niveau du bruit des alimentations, des amplificateurs de la chaîne d'acquisition, de la robustesse vis à vis des parasites électromagnétiques, du nombre de bits des convertisseurs analogiques-numériques.

Les informations acquises par le dispositif de détection selon l'invention peuvent être utilisées à diverses fins : imagerie, spectrométrie, ...

## Revendications

1. Dispositif de détection d'un flux photonique émis par une scène, de type à balayage, comportant au moins une voie (V) d'acquisition comprenant :
- plusieurs détecteurs utiles (1), alignés avec la direction du balayage, associés chacun avec un préamplificateur (2), destinés à recevoir chacun une même fraction du flux photonique provenant de la scène et à fournir aux préamplificateurs (2) associés une information représentative de la fraction de flux photonique reçue, ces préamplificateurs (2) délivrant un signal électrique en réponse à l'information et ayant une fonction de transfert modifiable par application d'un stimulus (Sétat),
- un dispositif de sommation retardée (4) des signaux émis par les préamplificateurs de la voie (V),
**caractérisé en ce que**, la voie (V) coopère avec au moins un dispositif de calibration (8) comportant :
- un détecteur de calibration (9) situé en amont des détecteurs utiles (1) par rapport au sens du balayage, destiné à recevoir la fraction de flux photonique avant les détecteurs utiles (1) de la voie (V), et
- un dispositif d'élaboration du stimulus (11) à partir de la fraction de flux reçue par le détecteur de calibration (9),
et avec au moins un dispositif de distribution du stimulus (13) en synchronisme avec le balayage, pour appliquer aux préamplificateurs (2) de la voie le stimulus avant qu'ils n'aient reçu l'information des détecteurs utiles associés (1).

2. Dispositif de détection selon la revendication 1, **caractérisé en ce que** le détecteur de calibration (9) est de même type que les détecteurs utiles (1).

3. Dispositif de détection selon l'une des revendications 1 ou 2, **caractérisé en ce que** les préamplificateurs (2) de la voie (V) sont de type intégrateur.

4. Dispositif de détection selon la revendication 3, **caractérisé en ce que** le stimulus (Sétat) sélectionne un condensateur d'intégration (C1) des préamplificateurs (2) de la voie parmi plusieurs (C1, C2).

5. Dispositif de détection selon l'une des revendications 1 à 4, **caractérisé en ce que** le dispositif de calibration (8) comporte un préamplificateur de calibration (10) connecté entre le détecteur de calibration (9) et le dispositif d'élaboration du stimulus (11).

6. Dispositif de détection selon la revendication 5, **caractérisé en ce que** le préamplificateur de calibration (10) est de même type que les préamplificateurs (2) de la voie.

7. Dispositif de détection selon l'une des revendications 1 à 6, **caractérisé en ce que** le dispositif d'élaboration du stimulus (11) réalise une comparaison entre un signal représentatif de la fraction de flux photonique reçue par le détecteur de calibration (9) et au moins un seuil (S).

8. Dispositif de détection selon l'une des revendications 1 à 7, **caractérisé en ce que** le dispositif de distribution du stimulus (13) est une ligne à retard avec autant de cellules de retard (14) que de détecteurs utiles (1).

9. Dispositif de détection selon l'une des revendications 1 à 8, dans lequel la voie (V) coopère avec deux dispositifs de calibration (8.1, 8.2), l'un placé à une extrémité de la voie et l'autre à l'autre extrémité, de manière à autoriser un balayage bidirectionnel.

10. Dispositif de détection selon l'une des revendications 1 à 9, **caractérisé en ce que** le dispositif d'élaboration du stimulus (11) est apte à élaborer un stimulus bloqué à une valeur déterminée, pour tous les préamplificateurs de la voie, quelle que soit l'intensité du flux photonique provenant de la scène, de manière à réaliser un contrôle collectif de leur fonction de transfert.

11. Dispositif de détection selon l'une des revendications 1 à 10, **caractérisé en ce qu'**il comporte des moyens (50) pour combiner le stimulus (Sétat) à un signal (Spixel) délivré par le dispositif de sommation retardée (4).

12. Dispositif de détection selon l'une des revendications 1 à 11, **caractérisé en ce qu'**il est réalisé en technologie CMOS.

13. Procédé de détection d'un flux photonique émis par une scène, de type à balayage, à partir d'au moins une voie (V) d'acquisition comportant des détecteurs utiles (1) alignés avec la direction du balayage, associés chacun avec un préamplificateur (2), destinés à recevoir chacun une même fraction de flux photonique provenant de la scène et à délivrer aux préamplificateurs (2) associés une information représentative de la fraction de flux photonique reçue, ces préamplificateurs (2) ayant une fonction de transfert modifiable par application d'un stimulus (Sétat) et délivrant un signal,
dans lequel :
- on recueille, dans un détecteur de calibration (9) placé en amont des détecteurs utiles (1), la fraction de flux photonique provenant de la scène avant qu'elle n'atteigne les détecteurs utiles,
- on élabore le stimulus (Sétat) à partir de la fraction de flux recueillie par le détecteur de calibration,
- on distribue ce stimulus (Sétat), en synchronisme avec le balayage, aux préamplificateurs (2) de la voie avant qu'ils n'aient reçu l'information des détecteurs utiles associés (1), afin de contrôler individuellement leur fonction de transfert,
- on somme de manière retardée les signaux délivrés par les préamplificateurs de la voie.

## Claims

1. Device for detection of a photonic flux emitted by a scanning type scene comprising at least one acquisition channel (V) comprising:
- several useful detectors (1) aligned parallel to the scanning direction, each associated with a preamplifier (2), designed such that each receives the same fraction of photonic flux from the scene and supplies information representing the received fraction of photonic flux to the associated preamplifiers (2), these preamplifiers (2) outputting an electric signal in response to the information and having a transfer function that can be modified by application of a stimulus (Sétat),
- a time delay integration device (4) acting on signals emitted by preamplifiers of the channel (V),
**characterized in that** the channel (V) cooperates with at least one calibration device comprising:
- a calibration detector (9) located on the input side of the useful detectors (1) along the direction of scanning, designed to receive the fraction of photonic flux before the useful detectors (1) of the channel (V), and
- a stimulus generation device (11) starting from the fraction of flux received by the calibration detector (9),
and with at least one stimulus distribution device (13) synchronized with scanning, to apply the stimulus to the channel preamplifiers (2) before they have received information from the associated useful detectors (1).

2. Detection device according to claim 1, **characterized in that** the calibration detector (9) is of the same type as the useful detectors (1).

3. Detection device according to one of claims 1 or 2, **characterized in that** the preamplifiers (2) of the channel (V) are of the integrator type.

4. Detection device according to claim 3, **characterized in that** the stimulus (Sétat) selects one integration capacitor (C1) of the channel preamplifiers (2) among several capacitors (C1, C2).

5. Detection device according to any one of claims 1 to 4, **characterized in that** the calibration device (8) comprises a calibration preamplifier (10) connected between the calibration detector (9) and the stimulus generation device (11).

6. Detection device according to claim 5, **characterized in that** the calibration preamplifier (10) is of the same type as the channel preamplifiers (2).

7. Detection device according to any one of claims 1 to 6, **characterized in that** the stimulus generation device (11) makes a comparison between a signal representing the fraction of photonic flux received by the calibration detector (9) and at least one threshold (S).

8. Detection device according to any one of claims 1 to 7, **characterized in that** the stimulus distribution device (13) is a delay line with one delay cell (14) for each useful detector (1).

9. Detection device according to one of claims 1 to 8, in which the channel (V) cooperates with two calibration devices (8.1, 8.2), one at one end of the channel and the other at the other end, to enable two-directional scanning.

10. Detection device according to one of claims 1 to 9, **characterized in that** the stimulus generation device (11) is capable of producing a stimulus blocked at a given value, for all channel preamplifiers, regardless of the intensity of the photonic flux originating from the scene, in order to make a collective control of their transfer function.

11. Detection device according to one of claims 1 to 10, **characterized in that** it comprises means (50) of combining the stimulus (Sétat) with a signal (Spixel) output by the time delay integration device (4).

12. Detection device according to one of claims 1 to 11, **characterized in that** it is done using the CMOS technology.

13. Scanning type process for detection of a photonic flux emitted by a scene, starting from at least one acquisition channel (V) comprising useful detectors (1) along a line parallel to the direction of scanning, each associated with a preamplifier (2), and each designed to receive the same fraction of photonic flux from the scene and to output information representative of the received fraction of photonic flux to the associated preamplifiers (2), these preamplifiers (2) performing a transfer function that can be modified by application of a stimulus (Sétat) and outputting a signal,
in which:
- the fraction of photonic flux originating from the scene is collected in a calibration detector (9) on the input side of the useful detectors (1), before it reaches the useful detectors,
- the stimulus (Sétat) is generated starting from the collected flux fraction by the calibration detector,
- this stimulus (Sétat) is distributed synchronously with scanning to the preamplifiers (2) of the channel before they have received information from the associated useful detectors (1), in order to control their transfer function individually,
- the signals output by the channel preamplifiers are integrated after a delay.

## Patentansprüche

1. Vorrichtung des Typs mit Abtastung zur Detektion eines von einer Szene abgestrahlten Photonenflusses mit wenigstens einem Erfassungskanal (V), umfassend:
- mehrere gemäß der Abtastrichtung ausgerichtete Nutzdetektoren (1), jeder verbunden mit einem Vorverstärker (2) und jeder dazu bestimmt, einen gleichen Bruchteil des von der Szene stammenden Photonenflusses zu empfangen und den angeschlossenen Vorverstärkern (2) eine Information zu liefern, die repräsentativ ist für den empfangenen Photonenflussbruchteil, wobei diese Vorverstärker (2) als Antwort auf die Information ein elektrisches Signal liefern und eine durch Anwendung eines Stimulus (Sétat) modifizierbare Transferfunktion haben,
- eine Einrichtung (4) zur verzögerten Summierung der durch die Vorverstärker des Kanals (V) gelieferten Signale,
**dadurch gekennzeichnet, dass** der Kanal (V) mit wenigstens einer Kalibrierungseinrichtung (8) kooperiert, umfassend:
- einen den Nutzdetektoren (1) in Bezug auf die Abtastrichtung vorgeschalteten Kalibrierdetektor (9), dazu bestimmt, den Photonenflussbruchteil vor den Detektoren (1) des Kanals (V) zu empfangen, und
- eine Einrichtung (11) zur Erzeugung des Stimulus aufgrund des durch den Kalibrierdetektor (9) empfangenen Photonenflussbruchteils,
und mit wenigstens einer Einrichtung (13) für eine zur Abtastung synchrone Verteilung des Stimulus, um den Stimulus auf die Vorverstärker (2) des Kanals anzuwenden, bevor sie die Information der angeschlossenen Nutzdetektoren (1) erhalten haben.

2. Detektionsvorrichtung nach Anspruch 1, **dadurch gekennzeichnet, dass** der Kalibrierdetektor (9) von demselben Typ ist wie die Nutzdetektoren (1).

3. Detektionsvorrichtung nach einem der Ansprüche 1 oder 2, **dadurch gekennzeichnet, dass** die Vorverstärker (2) des Kanals (V) vom Typ Integrierer sind.

4. Detektionsvorrichtung nach Anspruch 3, **dadurch gekennzeichnet, dass** der Stimulus (Sétat) einen Integrationskondensator (C1) unter mehreren (C1, C2) der Vorverstärker (2) des Kanals selektiert.

5. Detektionsvorrichtung nach einem der Ansprüche 1 bis 4, **dadurch gekennzeichnet, dass** die Kalibriereinrichtung (8) einen Kalibrier-Vorverstärker (10) umfasst, geschaltet zwischen dem Kalibrierdetektor (9) und der Stimuluserzeugungseinrichtung (11).

6. Detektionsvorrichtung nach Anspruch 5, **dadurch gekennzeichnet, dass** der Kalibrier-Vorverstärker (10) von demselben Typ ist wie die Vorverstärker (2) des Kanals.

7. Detektionsvorrichtung nach einem der Ansprüche 1 bis 6, **dadurch gekennzeichnet, dass** die Stimuluserzeugungseinrichtung (11) einen Vergleich zwischen einem von dem Kalibrierdetektor (9) empfangenen, für den Photonenbruchteil repräsentativen Signal und wenigstens einem Schwellenwert (S) ist.

8. Detektionsvorrichtung nach einem der Ansprüche 1 bis 7, **dadurch gekennzeichnet, dass** die Stimulusverteilungseinrichtung (13) eine Verzögerungsleitung mit ebenso vielen Verzögerungszellen (14) wie Nutzdetektoren (1) ist.

9. Detektionsvorrichtung nach einem der Ansprüche 1 bis 8, bei der der Kanal (V) mit zwei Kalibriereinrichtungen (8.1, 8.2) kooperiert, wobei die eine sich an einem Ende des Kanals befindet und die andere am anderen Ende, um eine bidirektionale Abtastung zu ermöglichen.

10. Detektionsvorrichtung nach einem der Ansprüche 1 bis 9, **dadurch gekennzeichnet, dass** die Stimuluserzeugungseinrichtung (11) fähig ist, für alle Vorverstärker des Kanals einen auf einem bestimmten Wert blockierten Stimulus zu erzeugen, unabhängig von der Intensität des von der Szene stammenden Photonenflusses, um eine kollektive Kontrolle ihrer Transferfunktion zu realisieren.

11. Detektionsvorrichtung nach einem der Ansprüche 1 bis 10, **dadurch gekennzeichnet, dass** sie Einrichtungen (50) zur Kombination des Stimulus (Sétat) mit einem durch die Summierungsverzögerungseinrichtung (4) gelieferten Signal (Spixel) umfasst.

12. Detektionsvorrichtung nach einem der Ansprüche 1 bis 11, **dadurch gekennzeichnet, dass** sie in CMOS-Technik realisiert ist.

13. Verfahren des Typs mit Abtastung zur Detektion eines von einer Szene abgestrahlten Photonenflusses mit wenigstens einem Erfassungskanal (V), gemäß der Abtastrichtung ausgerichtete Nutzdetektoren (1) umfassend, jeder verbunden mit einem Vorverstärker (2) und jeder dazu bestimmt, einen gleichen Bruchteil des von der Szene stammenden Photonenflusses zu empfangen und den angeschlossenen Vorverstärkern (2) eine Information zu liefern, die repräsentativ ist für den empfangenen Photonenflussbruchteil, wobei diese Vorverstärker (2) eine durch Anwendung eines Stimulus (Sétat) modifizierbare Transferfunktion haben und ein Signal liefern,
in dem:
- man in einem - Nutzdetektoren (1) vorgeschalteten - Kalibrierdetektor (9) den von der Szene stammenden Photonenflussbruchteil empfängt, bevor er die Nutzdetektoren erreicht,
- man den Stimulus (Sétat) aufgrund des durch den Kalibrierdetektor empfangenen Photonenflussbruchteils erzeugt,
- man diesen Stimulus (Sétat) synchron zur Abtastung an die Vorverstärker (2) des Kanals verteilt, bevor sie die Information der angeschlossenen Nutzdetektoren (1) erhalten haben, um ihre Transferfunktion individuell zu kontrollieren,
- man die durch die Vorverstärker des Kanals gelieferten Signale auf verzögerte Weise summiert.
